# EUROPEAN PATENT APPLICATION

(11) **EP 4 239 967 A1**
(43) Date of publication of application: **06.09.2023**
(21) Application number: 23159891.3
(22) Date of filing: 03.03.2023
(51) Int. Cl.: H04L 41/0806, H04L 41/0895, H04W 24/02, H04W 28/16, H04L 41/5051, H04L 41/14, H04L 41/40, H04L 41/5019

(54) **NETWORK SLICING METHOD AND SYSTEM FOR 5G NETWORKS**

(30) Priority: 04.03.2022 US 202263316635 P; 16.11.2022 US 202217988177
(71) Applicant: Google LLC, Mountain View, CA 94043 (US)
(72) Inventor: NEGM, Mohamed, 60306 Frankfurt am Main (DE)
(74) Representative: Betten & Resch

(57) **Abstract**

A method and system for determining a network slice as part of a network slices as a service (NSaaS) implementation. The method takes into account the network function and infrastructure components to determine a network slice in response to a customer request.

## Description

### CROSS REFERENCE TO RELATED APPLICATIONS

The present application claims the benefit of the filing date of U.S. Provisional Patent Application No. 63/316,635, filed March 4, 2022, the disclosure of which is hereby incorporated herein by reference.

### BACKGROUND

Network slicing allows a network operator to create virtual networks, or network slices, within the same physical network. The network slices may then be used to support services. The technology offers network operators the capability to segment and isolate their network resources in an automated manner and offer those resources as network slices to customers (who may add other communication services in using the slice with end consumers). In this regard, Network Slices as a Service (NSaaS) is becoming more prevalent among communications service providers.

Network slicing procedures typically define a network slice by a slice profile and a service profile. The slice profile describes the network requirements such as quality of service (QoS), speed, latency, reliability, security, and other component specific requirements. The service profile sets the service requirements that the slice needs to satisfy, *e.g.,* coverage, availability, etc. Both profiles form the slice object to be created by the network operator. Current approaches to network slice creation are typically not dynamic and do not take into account other conditions.

### SUMMARY

Aspects of the disclosed technology may be implemented as a method or process, as an apparatus, as a system, or on a non-transitory computer readable medium.

According to one aspect of the present disclosure, a method and system are provided for determining a network slice as part of a network slices as a service (NSaaS) implementation. The method takes into account the network function and infrastructure components to determine a network slice in response to a customer request.

For example, the disclosed technology may comprise a method for determining a network slice to support a network service. The method may comprise receiving a request for the network slice, the network slice having a service profile; determining one or more slice subnets and slice subnet providers associated with the one or more slice subnets, based on the service profile and parameters associated with the slice subnet providers used by the network operator; determining one or more network function providers based on the determined one or more slice subnets, the determined slice subnet providers, and network function characteristics of a given network function provider; and instantiating a set of network resources of the determined slice subnet providers and the determined one or more network function providers to provide the network slice to support the network service.

The method may comprise aggregating usage statistics associated with the network slice and modifying the network slice based on the usage statistics. Usage statistics may comprise usage metrics.

In the method, parameters may comprise one or more of a service quota of the one or more slice subnet providers, service locations of the one or more slice subnet providers, service price, or a service preference. The network function characteristics may comprise one or more performance metrics, capabilities metrics, or footprint of functions provided by each of the one or more network providers.

In the method, determining one or more slice subnets and slice subnet providers may comprise instantiating a provider relation function based on variables of the service profile and a cost function to produce the parameters based on a cost component used by the cost function. The variables include a projected location, a projected usage, or desired slice subnets.

The method may comprise aggregating performance metrics associated with the network slice. The method may also comprise modifying the network slice based on the performance metrics.

As another example, the technology may comprise a system for determining a network slice to support a network service. The system may comprise one or more processing devices and one or more memories having instructions stored thereon that, when executed by the one or more processing devices, cause the one or more processing devices to: receive a request for the network slice, the network slice having a service profile; determine one or more slice subnets and slice subnet providers associated with the one or more slice subnets, based on the service profile and parameters associated with the slice subnet providers used by the network operator; determine one or more network function providers based on the determined one or more slice subnets, the determined slice subnet providers, and network function characteristics of a given network function provider; and instantiate a set of network resources of the determined slice subnet providers and the determined one or more network function providers to implement the determined one or more slice subnets so as to provide the network slice to support the network service.

The instructions of the system may comprise an instruction that causes the one or more processing devices to aggregate usage statistics associated with the network slice and modify the network slice based on the usage statistics. Usage statistics may comprise usage metrics. Further, parameters may comprise one or more of a service quota of the one or more slice subnet providers, service locations of the one or more slice subnet providers, service price, or a service preference. Also, network function characteristics may comprise one or more performance metrics, capabilities metrics, or footprint of functions provided by each of the one or more network providers.

The instructions of the system may comprise an instruction that causes the one or more processing devices to determine one or more slice subnets and slice subnet providers by instantiating a provider relation function based on variables of the service profile and a cost function to produce the parameters based on a cost component used by the cost function. The variables may include a projected location, a projected usage, or desired slice subnets. The instructions of the system may also comprise an instruction that causes the one or more processing devices to aggregate performance metrics associated with the network slice. The instructions of the system may also comprise an instruction that causes the one or more processing devices to modify the network slice based on the performance metrics.

As another example, the technology may comprise a computing system for determining a network slice to support a network service. The system may comprise one or more client devices; and at least one host device having one or more interfaces, one or more processing devices, and one or more memories having instructions stored thereon that, when executed by the one or more processing devices, cause the one or more processing devices to: receive a request for the network slice, the network slice having a service profile; determine one or more slice subnets and slice subnet providers associated with the one or more slice subnets based on the service profile and parameters associated with the slice subnet providers used by the network operator; determine one or more network function providers based on the determined one or more slice subnets, the determined slice subnet providers, and network function characteristics of a given network function provider; and instantiate a set of network resources of the determined slice subnet providers and the determined one or more network function providers to implement the determined one or more slice subnets so as to provide the network slice to support the network service.

### BRIEF DESCRIPTION OF THE DRAWINGS

Figure 1 illustratively depicts an example system architecture in accordance with aspects of the disclosure.
Figure 2 illustratively depicts a flow diagram in accordance with aspects of the disclosure.
Figure 3A illustratively depicts a flow diagram in accordance with aspects of the disclosure.
Figure 3B illustratively depicts a flow diagram in accordance with aspects of the disclosure.
Figure 3C illustratively depicts a flow diagram in accordance with aspects of the disclosure.
Figure 3D illustratively depicts a flow diagram in accordance with aspects of the disclosure.
Figure 4 illustratively depicts a computing device that may be used in accordance with aspects of the disclosure.
Figure 5 illustratively depicts a computing system that may be used in accordance with aspects of the disclosure.

### DETAILED DESCRIPTION

An aspect of the disclosed technology is the inclusion of network-related components and/or characteristics in determining a network slice to deploy in response to a request for a network slice from a customer. For example, a first component may comprise a profile that provides details as to quotas, locations, slice subnet information, and other parameters related to the usage of a network provider's resources by a network operator. The providers may, for example, comprise an infrastructure provider and a network function provider. The parameters may serve as input to a provider relation function or algorithm that outputs a list of providers and associated subnets that may be used to satisfy the customer request. The provider relation function or algorithm may employ an algorithm or process that determines the most effective use of available subnet resources to satisfy the customer request. In some examples, the algorithm or process may comprise an optimization method that identifies subnets based on a given system or cost constraint.

A second component may comprise an aggregation component that provides usage statistics relating to the underlying resources consumed by the network operator as compared against the first component. For example, the second component may gather usage data relating to the slice subnets that indicate whether QoS, quotas, or other requirements are being met based on service-level agreements between the network operator and the customer. This allows the orchestration layer of the network operator to assess current usage status and apply parameters from the first component towards deployment (e.g., instantiation) or modification of a network slice.

A third component may account for performance, capabilities, foot-print, etc. of a network function for each provider. A network function may for example comprise routing, authentication, security, and switching. These functions may be implemented in software such as in, for example, a software defined network (SDN). This third component functions as part of the service orchestration process to choose the service or network function to be deployed as part of the network slice to support the service requirements defined in the service profile.

The foregoing components, along with the slice and service profiles allow determination of the network resource allocations that suitably, or in some instances optimally, fit the performance requirements or business needs defined in the service profile.

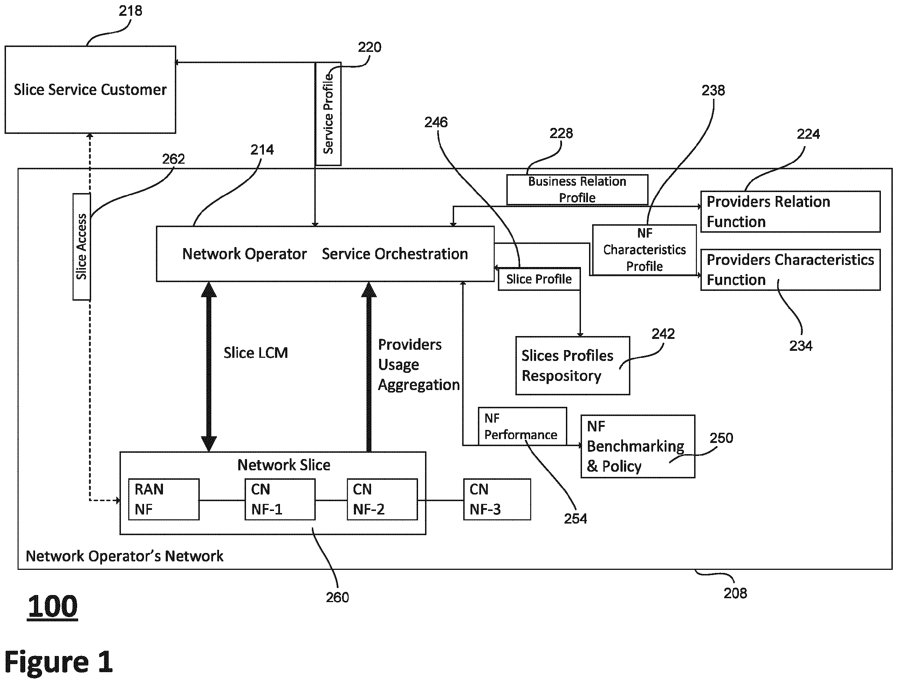

Turning now to Figure 1, which illustratively depicts an example system architecture 100 for implementing a method or process in accordance with an aspect of the disclosure. The system architecture includes a network operator network or system 208. The system 208 includes an orchestration function or module 214. Orchestration module 214 sets the policies and methods to enable connections that, when implemented on a network, deliver the services requested by a slice service customer 218. Slice service customer 218 may comprise a client computing device that is communicatively coupled to system 208 and that is operated by a mobile virtual network operator (MVNO). In this way, slice service customer 218 may comprise a MVNO. Slice service customer 218 provides a network slice request 220 to the system 208. The network slice request 220 includes a service profile. The service profile sets the service requirements that the requested slice needs to satisfy. Those service requirements may include, for example, coverage area, availability, bandwidth, reliability, latency, etc.

Orchestration function/module 214 also interfaces with providers relation function or module 224. Providers relation function 224 is a functional component that provides a business relation profile 228 as input to the orchestration function/module 214. Profile 228 defines attributes between the network operator, who provides network slices as a service, and providers at different layers in the network, e.g., network function and infrastructure. These attributes relate to parameters such as quotas, service locations, pricing, projected usage, and slice subnet information. These attributes or parameters may also include expected profit margin for a network operator, slice customer priority, provider preferences (based on network operator preferences), licenses, and a cost consumed at a providers' infrastructure.

Providers relation function 224 is a system component that uses a cost estimation algorithm or functionality to generate a list of providers that can provide the network slice requested based on one or more cost variables or constraints. The cost variables or constraints are deduced from the service profile included with slice request 220. In some examples, the cost estimation algorithm/functionality may comprise an optimization algorithm/functionality. The optimization algorithm receives as input various variables and outputs a prioritized list of providers for each slice subnet (*e.g.,* RAN, Core, Transmission). The output is typically determined with application of certain constraints, *e.g.,* cost, QoS.

Orchestration module 214 also interfaces with a providers characteristics function/module 234. Providers characteristics function 234 provides a network characteristics profile 238 to orchestration module 214. The providers characteristics function 234 combines the different requirements that are dependent on slice profile, the list of providers from providers relation function 224, network provider function parameters, as well as other factors such as output from a benchmarking system, to determine a network function provider for each network resource in the slice.

Orchestration module 214 also interfaces with slices profile repository 242. Slices profile repository 242 may comprise a memory that stores slice profiles 246 that enable communications between end points. Orchestration module 214 may also interface with a network function and policy module 250. This module 250 provides network function performance information 254 that provides an indication on how a certain provider may be performing in terms of the network resources it provides. For instance, module 250 may reduce the preference of a specific provider dynamically due to notice issues or performance degradations in a specific environment setting. Orchestration module 214 may factor in this information in determining which provider may be used to satisfy a given network slice request. Module 250 may provide, for example, latency, performance, and footprint metrics associated with a provider.

Using input from the foregoing modules, the orchestration module 214 determines a network slice 260 in response to the network slice request 220. As illustrated, network slice 260 may include Radio Access Network (RAN) network function (RAN NF) and one or more Core Network network functions (CN NFs). As shown, to complete the response to the request, slice service customer 218 is provided slice access 262.

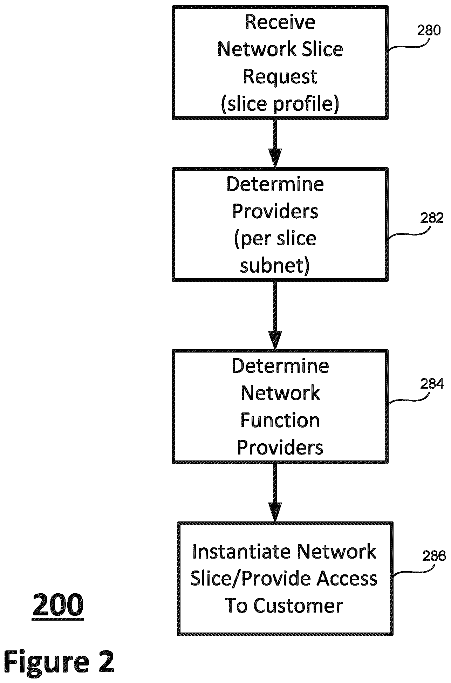

Figure 2 illustratively depicts a method or process 200 in accordance with an aspect of the disclosure. The method includes a step of receiving a network slice request that includes a slice profile, block 280. Based on the slice profile received, the network providers are determined on a per slice subnet basis, block 282. After the network providers are determined for different subnets, network function providers that can provide the network functions to support the slice subnets are determined, block 284. Once the network providers and network function providers are determined, the network slice can be determined form the slice subnets and instantiated, block 286. As part of instantiating the network slice, access may be provided to the customer that requested the network slice.

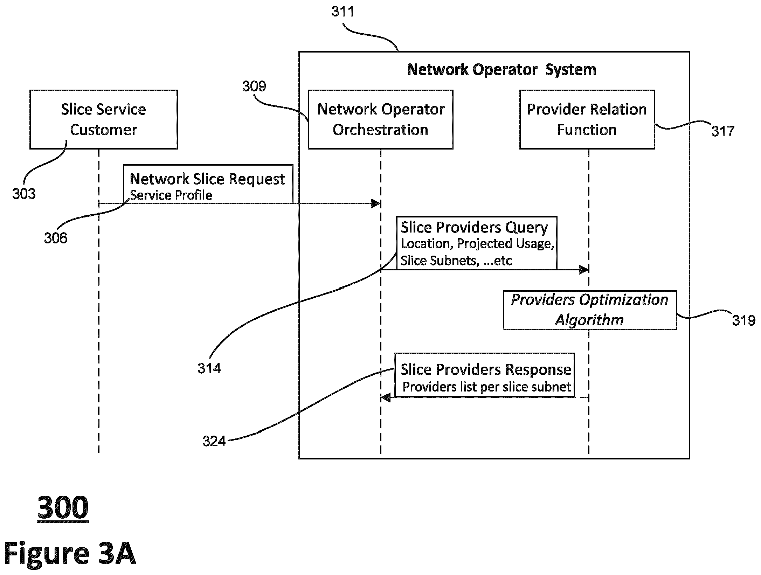

Figure 3A illustratively depicts a method or process 300 in accordance with an aspect of the disclosure. The process includes a slice service customer 303 issuing a network slice request 306 to a network operator orchestration module 309 in a network operator system 311. Based on the network slice request 306, orchestration module 309 generates a slice providers query 314 that is received at a provider relation function/module 317. The slice providers query 314 may include parameters such as service location, projected usage, and slice subnets. Provider relation function/module 317 applies an algorithm 319 based on the parameters included in query 314 to determine a slice providers response 324, which includes a list of providers per slice subnet, *e.g.,* network function and infrastructure providers.

Algorithm 319 may function as an optimization algorithm that functions to provide a prioritized list of providers for each slice subnet based on two primary inputs: 1) a cost function to be optimized; and 2) service information. Algorithm 319 may take into account certain operational costs required by a network operator. For example, a slice with a high throughput may require a relatively high level of processing components from the different providers, which may incur significant cost billed on an hourly basis. The network operator offering the slicing service may have different providers and different service-level agreements (SLAs), as well as discounts. The cost function in this instance would be the cost of the processing infrastructure, which is provided as input of the optimization function. The network operator may also supply this input with service information such as, for example: Service usage expected locations (different providers may offer different prices based on location), Quotas to be consumed by the service as per the customer (providers may offer discounted prices for certain amounts of usage, such as free tier), and Licenses for the service underlying components (providers usually have different licensing schemas for each service offered). This information allows the optimization function to basically provide a priority list of providers for each slice subnet, to account for the optimization cost function needed. The cost function is not limited to the cost of the service, there could also be other requirements from the network operator to ensure best slice performance such as, for example, a latency cost function. Latency may impact the optimization function to choose providers of infrastructure which are available as close to the service usage locations as possible instead of ones that are further away, or different providers for each slice subnet based on capability of infrastructure from each provider to serve latency sensitive services.

Module 324 provides a slice providers response. The provider relation module 317 provides the slice providers response 324 to the network operator orchestration module 309.

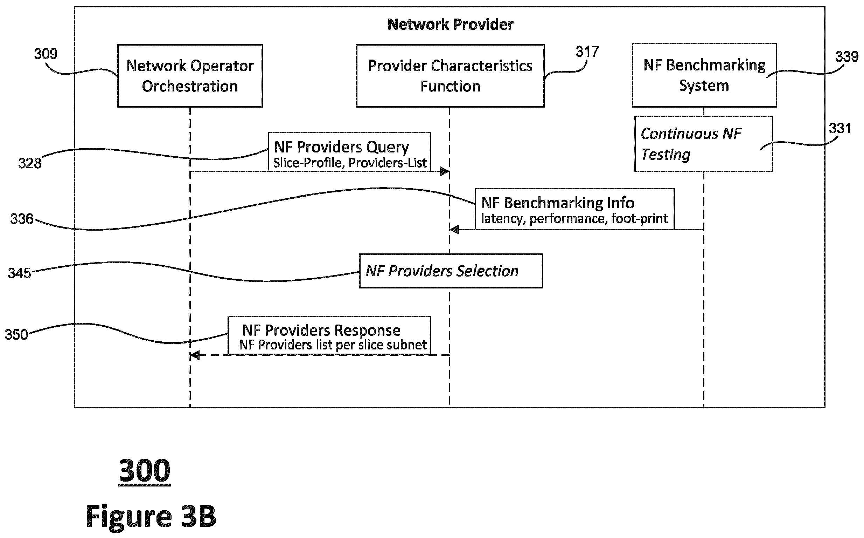

Turning now to Figure 3B, processing may continue to the network providers' function. Specifically, the orchestration module 309 may issue a network function (NF) providers query 328 to a providers characteristic module 317, which, for simplicity, is labelled with reference numeral 317, as it may be implemented as a part of the provider relation module but can also be implemented as a separate module. The query 328 may include parameters such as possible slice profile provided by the customer and the list of providers per subnet generated by the provider relation module. The providers characteristic module may also receive NF benchmarking information 336, such as, for example, latency, performance, and footprint, from a NF benchmarking system 339. Benchmarking information 336 may be collecting based on testing 331 done on the slice subnets that are returned in the slice providers response 324. Using the information provided in NF providers query 328, and possibly NF benchmarking information 336, the providers characteristic module 317 selects one or more NF providers 345 and provides a response 350 to the orchestration module 309. The response 350 may include a list of NF providers per subnet.

As indicated via Figure 3B, after the service orchestration of the network operator determines the proper provider for the different subnets, there could be different network function providers to choose from to deliver the service. The choice of network function provider could be made by the infrastructure provider in a SaaS model or a single network function provider. For example, in this case, the network operator doesn't need to use this function to choose which network function provider to choose from. Other cases, where the network function provider is to be selected by the network operator, there is a need to choose providers for the slice service requested. The slice profile already defines some characteristics for the underlying infrastructure such as QoS, Capacity, Networking, etc. This information represents configuration parameters for the network function running. The choice of the network function, on the other hand, is the part of concern here. Different providers have different design choices and goals which may cause the network functions to behave differently for each provider. To illustrate, one network function provider may be focusing on elasticity of the function, therefore, the network function can scale and flexibly deploy anywhere. Another provider may be focusing on high performance, thus, its network function would require a more fixed setting coupled with special hardware for enhanced performance. The providers characteristics function is able to combine the different requirements coming from the slice profile, the list of providers, network function provider parameters, and possibly a continuous benchmarking system output, to optimally choose the network function provider for each network component in the slice.

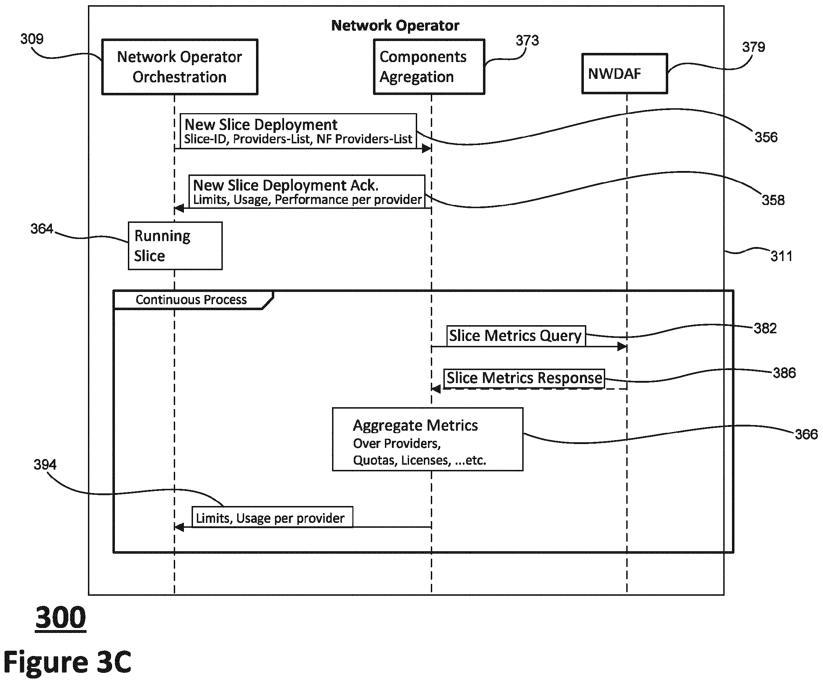

As illustrated in Figure 3C, based on the information provided in responses 324 and 350, the orchestration module 309 may determine a set of infrastructure and network function providers to use in instantiating a slice 356, 358 that will satisfy the network slice request 306. Once the slice is up and running, as shown at block 364, slice metrics 366 may be collected via a components aggregation module 373. Collection may be implemented via slice metrics query 382 to a network data analytics function (NWDAF) 379 which returns responses 386. The metrics may be aggregated over multiple providers and include information about quotas, licenses, etc., and be provided to the orchestration module as providers aggregation information 394. This information 394 may be used to modify the running slice 364 so that the requirements specified in the network slice request are met.

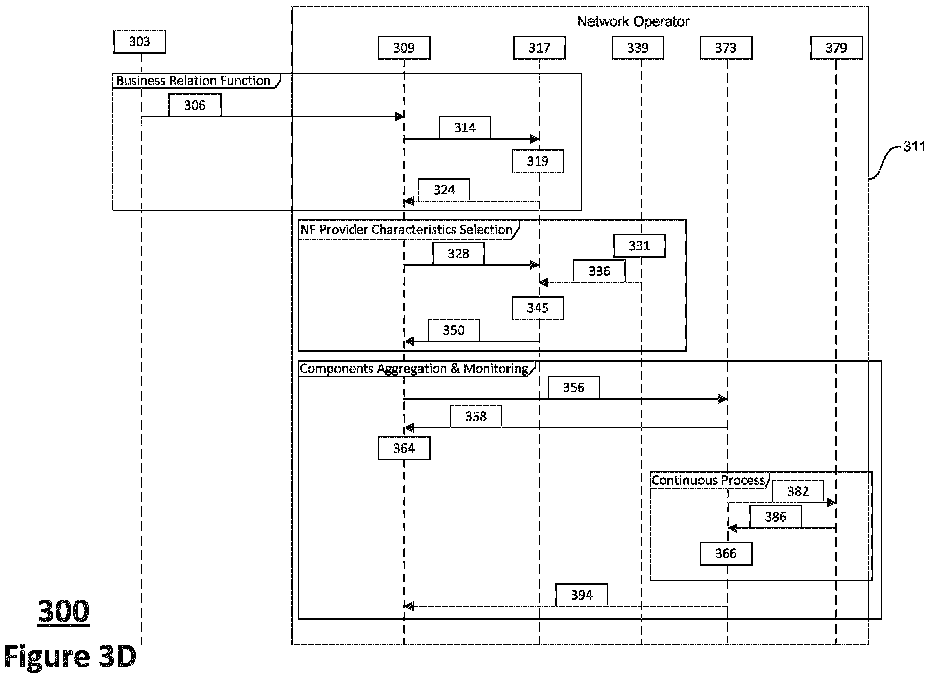

Figure 3D shows the entire process flow illustrated in Figures 3A, 3B, and 3C. As a further example, the process may begin when an MVNO requests from a network operator (e.g., Verizon, AT&T, T-Mobile) a network slice for supporting a gaming application. Gaming applications are typically bandwidth-heavy and latency intolerant. The network orchestration module, in response to receiving such a request, may interrogate the provider relation function to determine based on, for example, the service locations for the gaming application, projected usage, and slice profile to determine a list of subnet slice providers that may be used to support the gaming application. By considering other parameters or attributes beyond slice profile, the provider relation function may determine that certain subnet slice providers are not candidates because they are not able to meet the service demands of a gaming application or, that between two providers that can meet such service demands, one provider may be more economically efficient than another. This results in a more dynamic determination of which slice providers should be candidates to service the gaming application and may rank them.

Using the list of providers and the slice profile, the providers characteristics function may then determine a set of network function providers that should be considered to support the gaming application. Network function providers may be chosen per slice subnet based on factors such as how much computing resources a given provider may require to support the gaming application. For example, the computing resources of one network function provider may be at locations that introduce too much latency for the gaming application to perform reliably.

Once the providers are selected and the slice subnets are selected, the subnets are instantiated to implement the network slice necessary to support the gaming application. As indicated via Figures 3C and 3D, the process may continue with the collection of performance metrics that track how the gaming application is performing on the network slice. This allows for dynamic reengineering of the network slice if customer expectations are not met, or if it turns out that network resources are underutilized or running close to peak performance, etc.

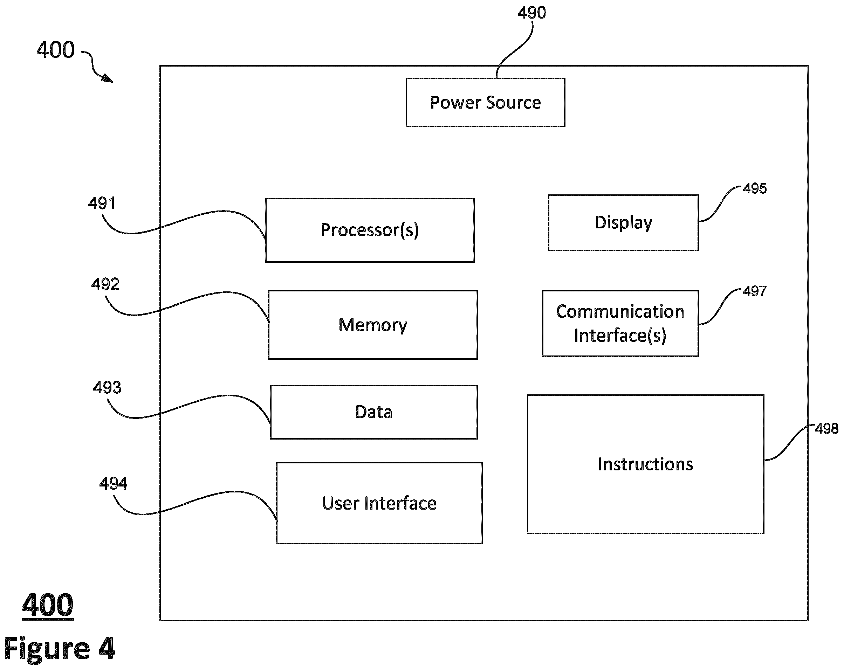

Figure 4 illustrates an example computing device according to aspects of the disclosed technology. Figure 4 illustrates aspects of a computing device 400. In some examples, device 400 can be a laptop, a desktop, or a server. In some examples, device 400 may comprise one or more servers in a server-client type network. In other examples, device 400 may comprise a host machine that instantiates virtual machines as part of a cloud computing environment. Computing device 400 may comprise a machine that contains the hardware and software modules of network or system 208. As such, computing device 400 may comprise a server or host machine running multiple virtual machines to implement the processes or methods described herein.

Device 400 may contain a power source 490, processor(s) 491, memory 492, data 493, a user interface 494, a display 495, communication interface(s) 497, and instructions 498. The power source may be any suitable power source to generate electricity, such as a battery, a chemical cell, a capacitor, a solar panel, or an inductive charger. Processor(s) 491 may be any conventional processor, such as commercially available microprocessors or application-specific integrated circuits (ASICs). Memory 492 may be of a type of memory operative to store information accessible by the processors, including a non-transitory computer-readable medium, or another medium that stores data which may be read with the aid of an electronic device, such as a hard drive, memory card, read-only memory (ROM), random access memory (RAM), optical disks, as well as other write-capable and read-only memories. The subject matter disclosed herein may include different combinations of the foregoing, whereby different portions of the instructions and data are stored on different types of media.

Data 493 of device 400 may be retrieved, stored, or modified by the processors in accordance with the instructions 498. For instance, although the present disclosure is not limited by a particular data structure, data 493 may be stored in computer registers, in a relational database as a table having a plurality of different fields and records, XML documents, or flat files. Data 493 may also be formatted in a computer-readable format such as, but not limited to, binary values, ASCII, or Unicode. Moreover, data 493 may comprise information sufficient to identify the relevant information, such as numbers, descriptive text, proprietary codes, pointers, references to data stored in other memories (including other network locations), or information that is used by a function to calculate the relevant data.

Instructions 498 may control various components and functions of device 400. For example, instructions 498 may be executed to perform any of the methods indicated in this disclosure. In some examples, algorithms can be included as a subset of or otherwise as part of instructions 498 included in device 400. Instructions 498 can include algorithms to execute any of the methods or a subset of the methods described within this disclosure.

User interface 494 may be a screen which allows a user to interact with device 400, such as a touch screen or buttons. Display 495 can be an LCD, LED, mobile phone display, electronic ink, or other display to display information about device 400. User interface 494 can allow for both input from a user and output to a user. Communication interface(s) 497 can include hardware and software to enable communication of data over standards such as Wi-Fi, Bluetooth, infrared, radio-wave, and/or other analog and digital communication standards. Communication interface(s) 497 allow for device 400 to be updated and for information generated by device 400 to be shared to other devices. In some examples, communication interface(s) 497 can send information stored in memory 492 to another user device for display, storage, or further analysis.

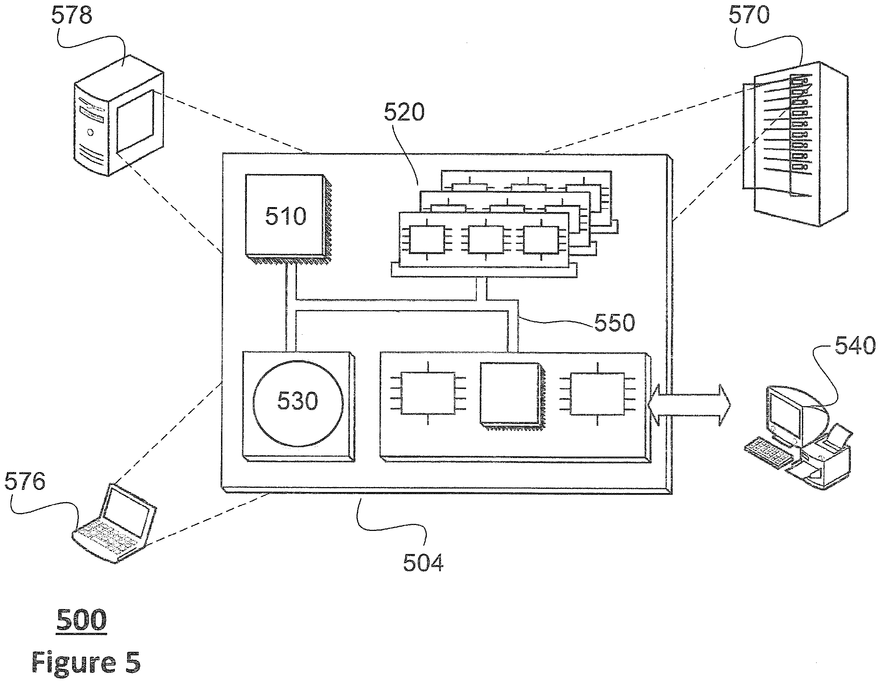

Figure 5 is a schematic diagram that shows an example of a computing system 500. The computing system 500 can be used for some or all of the operations described previously, according to some implementations. The computing system 500 includes a computing element 504. Computing element 504 comprises a processor 510, a memory 520, and a storage device 530. The computing system also includes an input/output device 540. Each of the processor 510, the memory 520, the storage device 530, and the input/output device 540 are interconnected using a system bus 550. The processor 510 is capable of processing instructions for execution within the computing system 500. In some implementations, the processor 510 is a single-threaded processor. In some implementations, the processor 510 is a multi-threaded processor. The processor 510 is capable of processing instructions stored in the memory 520 or on the storage device 530 to display graphical information for a user interface on the input/output device 540.

The memory 520 stores information or instructions (as discussed above) within the computing system 500. In some implementations, the memory 520 is a computer-readable medium. In some implementations, the memory 520 is a volatile memory unit. In some implementations, the memory 520 is a non-volatile memory unit.

The storage device 530 is capable of providing mass storage for the computing system 500. In some implementations, the storage device 530 is a computer-readable medium. In various different implementations, the storage device 530 may be a floppy disk device, a hard disk device, an optical disk device, or a tape device.

The input/output device 540 provides input/output operations for the computing system 500. In some implementations, the input/output device 540 includes a keyboard and/or pointing device. In some implementations, the input/output device 540 includes a display unit for displaying graphical user interfaces.

Some features described can be implemented in digital electronic circuitry, or in computer hardware, firmware, software, or in combinations of these elements. The apparatus can be implemented in a computer program product tangibly embodied in an information carrier, e.g., in a machine-readable storage device, for execution by a programmable processor; and method steps can be performed by a programmable processor executing a program of instructions to perform functions of the described implementations by operating on input data and generating output. The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and a sole processor or one of multiple processors of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including, by way of example, semiconductor memory devices, such as EPROM (erasable programmable read-only memory), EEPROM (electrically erasable programmable read-only memory), and flash memory devices; magnetic disks such as internal hard disks and removable disks; magneto-optical disks; and CD-ROM (compact disc read-only memory) and DVD-ROM (digital versatile disc read-only memory) disks. The processor and the memory can be supplemented by, or incorporated in, ASICs (application-specific integrated circuits).

To provide for interaction with a user, some features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

Some features can be implemented in a computer system that includes a back-end component, such as a data server, or that includes a middleware component, such as an application server or an Internet server, or that includes a front-end component, such as a client computer having a graphical user interface or an Internet browser, or any combination of these elements. The components of the system can be connected by any form or medium of digital data communication, such as a communication network. Examples of communication networks include, *e.g.,* a LAN (local area network), a WAN (wide area network), and the computers and networks forming the Internet.

The computer system can include clients and servers. A client and server are generally remote from each other and typically interact through a network(s), such as the network(s) described above. The relationship of client and server arises by virtue of computer programs running on the respective computers and having a client-server relationship to each other.

For instance, in a client-server computing system, the computing element 504 may be incorporated in a host 570. Host 570 may include one or more computing elements 504 and function to host virtual sessions. Host 570 may also be considered as server. Host 570 may interface with a client device 576 over a LAN/WAN connection. Host 570 may also be accessible via input/output devices 540. In this instance, the client devices 576 may be located at client premises. A client may issue a request for a network slice, as previously discussed, using, for example, client device 576. Host device 570 may then process that request as discussed above. In processing such a request, host device 570 may need to access other computing resources over the network, *e.g.,* NWDAF functionality, residing in, for example, a remote server 578. Server 578 may provide any information requested by host 570, and host 570 may then use such information to respond to the request.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A method for determining a network slice to support a network service, comprising:
receiving a request for the network slice, the network slice having a service profile;
determining one or more slice subnets and slice subnet providers associated with the one or more slice subnets based on the service profile and parameters associated with the slice subnet providers used by the network operator;
determining one or more network function providers based on the determined one or more slice subnets, the determined slice subnet providers, and network function characteristics of a given network function provider; and
instantiating a set of network resources of the determined slice subnet providers and the determined one or more network function providers to implement the determined one or more slice subnets so as to provide the network slice to support the network service.

2. The method of claim 1, comprising aggregating usage statistics associated with the network slice and modifying the network slice based on the usage statistics.

3. The method of claim 2, wherein the usage statistics comprise usage metrics.

4. The method of any one of the previous claims, wherein the parameters comprise one or more of a service quota of the one or more slice subnet providers, service locations of the one or more slice subnet providers, service price, or a service preference.

5. The method of any one of the previous claims, wherein the network function characteristics comprise one or more performance metrics, capabilities metrics, or footprint of functions provided by each of the one or more network providers.

6. The method of any one of the previous claims, wherein determining one or more slice subnets and slice subnet providers comprises instantiating a provider relation function based on variables of the service profile and a cost function to produce the parameters based on a cost component used by the cost function.

7. The method of claim 6, wherein the variables include a projected location, a projected usage, or desired slice subnets.

8. The method of any one of the previous claims, comprising aggregating performance metrics associated with the network slice,
comprising optionally modifying the network slice based on the performance metrics.

9. A system for determining a network slice to support a network service, comprising:
one or more processing devices; and
one or more memories having instructions stored thereon that, when executed by the one or more processing devices, cause the one or more processing devices to:
receive a request for the network slice, the network slice having a service profile;
determine one or more slice subnets and slice subnet providers associated with the one or more slice subnets based on the service profile and parameters associated with the slice subnet providers used by the network operator;
determine one or more network function providers based on the determined one or more slice subnets, the determined slice subnet providers, and network function characteristics of a given network function provider; and
instantiate a set of network resources of the determined slice subnet providers and the determined one or more network function providers to implement the determined one or more slice subnets so as to provide the network slice to support the network service.

10. The system of claim 9, wherein the instructions cause the one or more processing devices to aggregate usage statistics associated with the network slice and modify the network slice based on the usage statistics, and
wherein the usage statistics optionally comprise usage metrics.

11. The system of any one of claims 9 or 10, wherein the parameters comprise one or more of a service quota of the one or more slice subnet providers, service locations of the one or more slice subnet providers, service price, or a service preference.

12. The system of any one of claims 9 to 11, wherein the network function characteristics comprise one or more performance metrics, capabilities metrics, or footprint of functions provided by each of the one or more network providers.

13. The system of any one of claim 9 to 12, wherein the instructions cause the one or more processing devices to determine one or more slice subnets and slice subnet providers by instantiating a provider relation function based on variables of the service profile and a cost function to produce the parameters based on a cost component used by the cost function, and wherein the variables optionally include a projected location, a projected usage, or desired slice subnets.

14. The system of any one of claims 9 to 13, wherein the instructions cause the one or more processing devices to aggregate performance metrics associated with the network slice,
, wherein the instructions optionally cause the one or more processing devices to modify the network slice based on the performance metrics.

15. The system of claim any one of claims 9 to 14 further comprising:
one or more client devices; and
at least one host device having one or more interfaces, wherein the request is received via the one or more interfaces.
